# EUROPEAN PATENT APPLICATION

(11) **EP 3 460 945 A1**
(43) Date of publication of application: **27.03.2019**
(21) Application number: 16902130.0
(22) Date of filing: 18.07.2016
(51) Int. Cl.: H02J 7/00

(54) **CHARGING CONTROL METHOD, DEVICE, AND SYSTEM**

(30) Priority: 18.05.2016 CN 201610328994
(71) Applicant: ZTE Corporation, Shenzhen, Guangdong 518057 (CN)
(72) Inventor: LIU, Shiwei, Shenzhen Guangdong 518057 (CN); CHEN, Tao, Shenzhen Guangdong 518057 (CN); WANG, Jiancheng, Shenzhen Guangdong 518057 (CN); PENG, Cong, Shenzhen Guangdong 518057 (CN); NING, Jinxing, Shenzhen Guangdong 518057 (CN)
(74) Representative: Lavoix
(86) International application number: PCT/CN2016/090327
(87) International publication number: WO 2017/197750

(57) **Abstract**

A charging control method, device, and system. The charging control method comprises: a terminal apparatus acquires a feedback voltage of a charging input port, and transmits the same to a charger; and the charger adjusts, according to the feedback voltage, the charger to provide, to the terminal apparatus, a charging voltage, and transmit power to the terminal apparatus.

## Description

### TECHNICAL FIELD

The disclosure relates to, but is not limited to, the field of communications, and in particular to a method, a device and a system for charging control.

### BACKGROUND

Charging schemes for intelligent terminals or cell phones have been very mature. In the related art, in order to shorten a charging time, different manufacturers use methods such as increasing a charging voltage or increasing a charging current to shorten the charging time. A charging line has a certain impedance (except wireless charging). Therefore, no matter increasing the charging voltage or increasing the charging current, a certain voltage drop is introduced, which results in that a voltage to a terminal charging control chip is lower than a preset output voltage of a charger, and therefore, a charging efficiency is reduced to some extent.

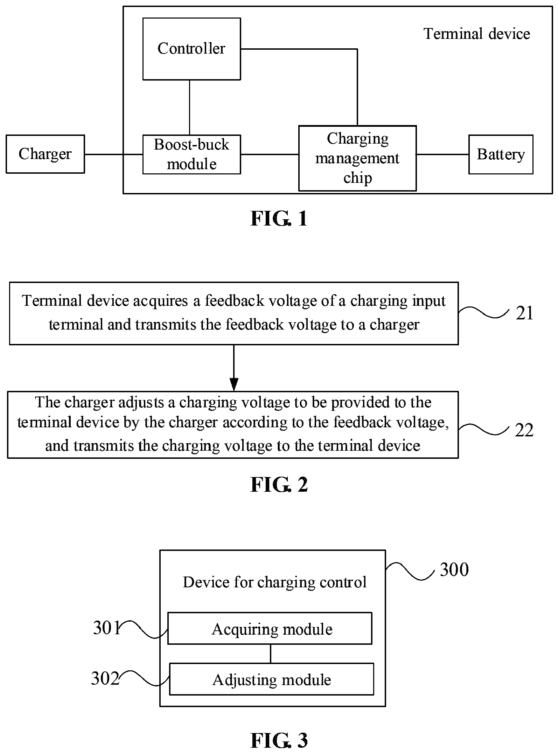

In addition, in the related art, it is proposed that to a voltage regulating circuit, such as a boost & buck (BUCK & BOOST) chip is added to a communication device, so that an input voltage of the terminal charging chip is maintained constant. As illustrated in FIG. 1, when an output voltage of the charger is set to 5 volts (V), an actual charging voltage to a terminal side is merely 4.5V due to the voltage drop across the charging line. Then the buck-boost module starts a boosting function to increase the voltage of 4.5V to 5V, and supplies the increased voltage to the charging chip to achieve a voltage of 5V at a charging management chip.

In the solution, with the buck-boost module added into the communication terminal, a voltage passing through the charging line can be increased. However, the number of components on a printed circuit board (PCB) of the terminal device is increased, and a large heat source is introduced. The BUCK & BOOST chip has a limited conversion efficiency, which increases the difficulty of a battery life and a heat dissipation scheme of the terminal device, and the like.

### SUMMARY

The following is an overview of the subject described in details herein. This summary is not intended to limit the scope of protection of the claims.

The present disclosure provides a method, a device and a system for charging control, which can adjust a charging voltage of a charger according to a feedback voltage of a charging input terminal of a terminal device, which is acquired in real time, and ensure that the charging input terminal at the terminal device side has a constant input voltage, thereby effectively avoiding a loss of charging efficiency due to a voltage drop caused by an impedance of a charging line.

A method for charging control is provided herein, which includes the following operations.

A terminal device acquires a voltage value of a feedback voltage of a charging input terminal and transmits the voltage value of the feedback voltage to a charger; and the charger adjusts a charging voltage to be provided to the terminal device by the charger according to the voltage value of the feedback voltage, and supplies power to the terminal device according to the adjusted voltage.

Optionally, in the above-described method, the process that the terminal device acquires the voltage value of the feedback voltage of the charging input terminal may include the following operations.

The terminal device acquires a voltage value of an input voltage of a charging input terminal; and the terminal device acquires the voltage value of the feedback voltage according to the voltage value of the input voltage, where a ratio of the voltage value of the feedback voltage to the voltage value of the input voltage is equal to a preset proportion value.

Optionally, in the above-described method, the process that the charger adjusts the charging voltage provided to the terminal device by the charger according to the voltage value of the feedback voltage, and supplies power to the terminal device according to the adjusted voltage may include the following operations.

The charger determines whether the voltage value of the feedback voltage is less than a voltage value of a preset reference voltage; when the voltage value of the feedback voltage is less than the voltage value of the preset reference voltage, the charger acquires a difference voltage between the preset reference voltage and the feedback voltage, and boosts the difference voltage to a target voltage, where the target voltage is equal to a voltage drop across a line between the terminal device and the charger; and the charger adds the target voltage to the charging voltage, and supplies power to the terminal device according to the added voltage.

A method for charging control is further provided herein, which includes the following operations.

The charger receives a voltage value of a feedback voltage from a terminal device; and the charger adjusts a charging voltage to be provided to the terminal device according to the voltage value of the feedback voltage, and supplies power to the terminal device according to the adjusted voltage.

Optionally, in the above-described method, the process that the charger adjusts the charging voltage to be provided to the terminal device according to the voltage value of the feedback voltage, and supplies power to the terminal device according to the adjusted voltage may include the following operations.

The charger determines whether the voltage value of the feedback voltage is less than a voltage value of a preset reference voltage; when the voltage value of the feedback voltage is less than the voltage value of the preset reference voltage, the charger acquires a difference voltage between the preset reference voltage and the feedback voltage, and boosts the difference voltage to a target voltage, where the target voltage is equal to a voltage drop on a line between the terminal device and the charger; and the charger adds the target voltage to the charging voltage, and supplies power to the terminal device according to the added voltage.

A device for charging control is further provided herein, which includes an acquiring module and an adjusting module.

The acquiring module is arranged to acquire a voltage value of a feedback voltage of a charging input terminal of a terminal device and transmit the voltage value of the feedback voltage to a charger.

The adjusting module is arranged to adjust a charging voltage to be provided to the terminal device by the charger according to the voltage value of the feedback voltage acquired by the acquiring module, and supply power to the terminal device according to the adjusted voltage.

Optionally, in the above-described device, the acquiring module may include a first acquiring unit and a second acquiring unit.

The first acquiring unit is arranged to acquire a voltage value of an input voltage of the charging input terminal of the terminal device.

The second acquiring unit is arranged to acquire the voltage value of the feedback voltage according to the voltage value of the input voltage, where a ratio of the voltage value of the feedback voltage to the voltage value of the input voltage is equal to a preset proportion value.

Optionally, in the above-described device, the adjusting module may include a determining unit, a boosting unit and an adding unit.

The determining unit is arranged to determine whether the voltage value of the feedback voltage is less than a voltage value of a preset reference voltage.

The boosting unit is arranged to, when the voltage value of the feedback voltage is less than the voltage value of the preset reference voltage, acquire a difference voltage between the preset reference voltage and the feedback voltage, and boost the difference voltage to a target voltage, where the target voltage is equal to a voltage drop across a line between the terminal device and the charger.

The adding unit is arranged to add the target voltage to the charging voltage and supply power to the terminal device according to the added voltage.

A charger is further provided herein, which includes an AC-DC conversion module and a voltage adjusting circuit.

The AC-DC conversion module includes a DC output terminal for providing a charging voltage to a terminal device to be charged.

The voltage adjusting circuit is arranged to receive a feedback voltage outputted by a feedback voltage output terminal of the terminal device and adjust the charging voltage to a preset voltage according to a voltage value of the feedback voltage. The voltage adjusting circuit includes a first port, a second port and a third port. The first port is electrically connected to the DC output terminal, the second port is electrically connected to the feedback voltage output terminal, and the third port is electrically connected to an input terminal of a charging control circuit of the terminal device.

Optionally, in the above-described charger, the voltage adjusting circuit may further include an operational amplifier and an adder circuit.

A non-inverting input terminal of the operational amplifier is connected to a preset reference voltage Vref, and an inverting input terminal of the operational amplifier is taken as the second port.

The adder circuit includes a first input terminal, a second input terminal and a preset voltage value output terminal. An output terminal of the operational amplifier is electrically connected to the first input terminal. The second input terminal is taken as the first port, and the preset voltage value output terminal is taken as the third port.

Specifically, when a voltage value of the preset reference voltage Vref is equal to a voltage value of the voltage of the input terminal of the charging control circuit, and is equal to a voltage value of the charging voltage, the voltage value of the feedback voltage is a first voltage value Vsense1.

An open loop gain of the operational amplifier is X=V/(Vref-Vsense2). V represents a voltage drop across the line between the third port and the input terminal of the charging control circuit when the charger begins constant-current charging, and Vsense2 represents a second voltage value of the feedback voltage when the charger begins constant-current charging.

Optionally, the above-described charger may further include a common ground line. One end of the common ground line is electrically connected to the other end of the second resistor, and the other end of the common ground line is connected to a ground line of the operational amplifier.

A system for charging control is further provided herein, which includes a terminal device, and the charger as described above.

The terminal device includes a charging control circuit and a voltage feedback circuit.

The charging control circuit is arranged to perform charging control on a battery, and includes an input terminal for receiving a charging voltage from the charger.

The voltage feedback circuit includes a feedback voltage input terminal and a feedback voltage output terminal, where the feedback voltage input terminal is electrically connected to an input terminal of the charging control circuit.

Optionally, in the above-described system for charging control, the voltage feedback circuit may further include a first resistor and a second resistor. One end of the first resistor is the feedback voltage input terminal, and the other end of the first resistor is the feedback voltage output terminal. The other end of the first resistor is electrically connected to one end of the second resistor, and the other end of the second resistor is grounded, where r1/r2=V0/Vref-1, and r1 represents a resistance value of the first resistor R1, r2 represents a resistance value of the second resistor R2, and V0 represents a voltage value of the charging voltage.

With the technical solution according to the present disclosure, a feedback voltage of a charging input terminal of a terminal device is acquired in real time, a charging voltage of a charger is adjusted according to the feedback voltage, and the charging voltage is transmitted to the terminal device, so that an input voltage of a charging terminal of the terminal device can reach the charging voltage provided by the charger, and is maintained constant, thereby effectively avoiding a loss of charging efficiency due to a voltage drop caused by an impedance of a charging line.

Other aspects will be apparent upon reading and understanding the drawings and detailed description.

### BRIEF DESCRIPTION OF DRAWINGS

FIG. 1 illustrates a block diagram of a structure of a terminal device capable of maintaining a constant charging voltage in the related art;
FIG. 2 illustrates a flowchart of a method for charging control according to a first embodiment of the present disclosure;
FIG. 3 illustrates a block diagram of a first structure of a device for charging control according to a second embodiment of the present disclosure;
FIG. 4 illustrates a block diagram of a second structure of a device for charging control according to a second embodiment of the present disclosure;
FIG. 5 illustrates a schematic diagram of a first circuit connection of a system for charging control according to a third embodiment of the present disclosure;
FIG. 6 illustrates a schematic diagram of a second circuit connection of a system for charging control according to a third embodiment of the present disclosure;
FIG. 7 illustrates a schematic diagram of a third circuit connection of a system for charging control according to a third embodiment of the present disclosure;
FIG. 8 illustrates a schematic diagram of a fourth circuit connection of a system for charging control according to a third embodiment of the present disclosure; and
FIG. 9 illustrate a schematic structural diagram of a data line of a charger according to a third embodiment of the present disclosure.

### DETAILED DESCRIPTION

The embodiments herein will be described in details below with reference to the drawings. It should be noted that, in the case of no conflict, the features in the embodiments and the embodiments in the present disclosure may be arbitrarily combined with each other.

### First embodiment

A method for charging control is provided according to an embodiment of the present disclosure. As illustrated in FIG. 2, the method includes the following actions S21 and S22.

At block 21, a terminal device acquires a feedback voltage of a charging input terminal and transmits the feedback voltage to a charger.

Optionally, the method for charging control according to the embodiment of the present disclosure may be applied to a system including the terminal device and the charger. The terminal device is provided with a charging control circuit for performing charging control on a battery of the terminal device, and the feedback voltage acquired in the block 21 may be a feedback voltage acquired from an input terminal of the charging control circuit.

In an optional embodiment, the above-described block 21 includes the following operations.

The terminal device acquires an input voltage of the charging input terminal.

The terminal device acquires the feedback voltage according to the input voltage, where a ratio of the feedback voltage to the input voltage is equal to a preset proportion value.

Optionally, the preset proportional value may be smaller than 1. That is, a part of the input voltage of the charging input terminal of the terminal device is taken as the feedback voltage for adjusting the charging voltage. In addition, the feedback voltage may be either obtained by means of a software program or acquired by a hardware circuit.

At block 22, the charger adjusts a charging voltage to be provided to the terminal device by the charger according to the feedback voltage, and transmits the charging voltage to the terminal device.

In the embodiment of the present disclosure, after the feedback voltage is acquired in the block 21, the charging voltage of the charger may be adjusted according to the feedback voltage, and transmitted to the terminal device, so that the input voltage of the charging input terminal of the terminal device is equal to the charging voltage.

Optionally, the charger may be provided with an AC-DC conversion module for converting an AC voltage to a DC voltage required by the terminal device. In this case, the charging voltage to be adjusted at block 21 is a voltage at a DC output terminal of the AC-DC conversion module.

In an optional embodiment, the above-described block 22 may include the following operations.

The charger determines whether the feedback voltage is less than a preset reference voltage.

When the feedback voltage is less than the preset reference voltage, the charger acquires a difference voltage between the preset reference voltage and the feedback voltage, and boosts the difference voltage to a target voltage, where the target voltage is equal to a voltage drop on a line between the terminal device and the charger.

The charger adds the target voltage to the charging voltage, and transmits the added voltage to the terminal device.

When the terminal device is being charged by using the charger, a voltage drop is generated across a line between the charger and the terminal device after the charging voltage outputted from the AC-DC conversion module of the charger passes through the line, so that an output terminal voltage of the charging control circuit of the terminal device is less than the charging voltage. However, in the embodiment of the present disclosure, when the above-described voltage drop is generated, the feedback voltage is compared with the preset reference voltage. When the feedback voltage is less than the preset reference voltage, it indicates that the charging voltage has a voltage drop when passing through the line between the charger and the terminal device, which results in a decrease of a voltage of the input terminal of the charging control circuit. Then a difference voltage between the preset reference voltage and the feedback voltage is boosted to the target voltage. The target voltage is added to the charging voltage, and the added voltage is transmitted to the terminal device. Since the target voltage is equal to the voltage drop across the line between the terminal device and the charger, a voltage obtained by adding the target voltage and the charging voltage, which is the input voltage of the charging input terminal of the terminal device, is equal to the charging voltage.

Therefore, with the method for charging control according to the embodiment of the present disclosure, the charging voltage of the charger can be adjusted according to the feedback voltage of the charging input terminal of the terminal device, which is acquired in real time, thereby ensuring a constant input voltage of the charging input terminal at the terminal device side, and effectively avoiding a loss of charging efficiency due to the voltage drop caused by the impedance of the charging line.

Another method for charging control is provided according to this embodiment, which is described from the view of the charger. The method includes the following operations.

The charger receives a voltage value of a feedback voltage from a terminal device.

The charger adjusts a charging voltage to be provided to the terminal device according to the voltage value of the feedback voltage, and supplies power to the terminal device according to the adjusted voltage.

Optionally, in the above-described method, the process that the charger adjusts the charging voltage to be provided to the terminal device according to the voltage value of the feedback voltage, and supplies power to the terminal device according to the adjusted voltage may include the following operations.

The charger determines whether the voltage value of the feedback voltage is less than a voltage value of a preset reference voltage.

When the voltage value of the feedback voltage is less than the voltage value of the preset reference voltage, the charger acquires a difference voltage between the preset reference voltage and the feedback voltage, and boosts the difference voltage to a target voltage, where the target voltage is equal to a voltage drop across a line between the terminal device and the charger.

The charger adds the target voltage to the charging voltage, and supplies power to the terminal device according to the added voltage.

### Second embodiment

A device for charging control is provided according to an embodiment of the present disclosure. As illustrated in FIG. 3, the device 300 includes an acquiring module 301 and an adjusting module 302.

The acquiring module 301 is arranged to acquire a feedback voltage of a charging input terminal of the terminal device and transmit the feedback voltage to the charger.

The adjusting module 302 is arranged to adjust the charging voltage to be provided to the terminal device by the charger according to the feedback voltage acquired by the acquiring module 301, and transmit the charging voltage to the terminal device.

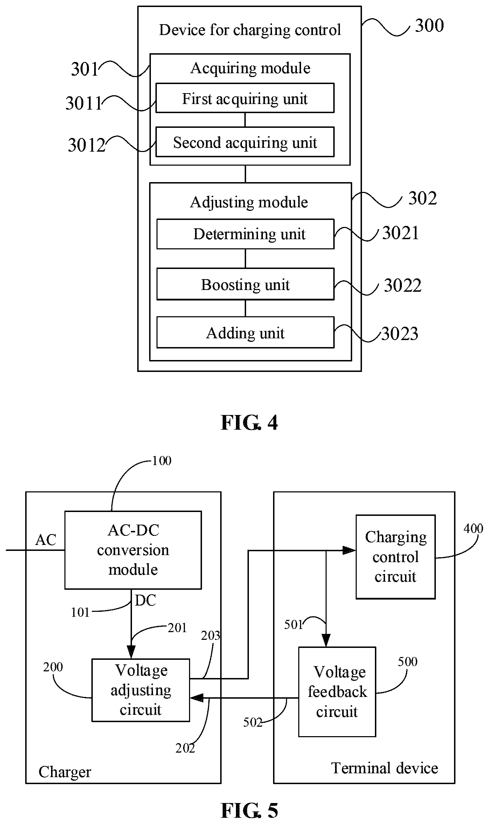

Optionally, as illustrated in FIG. 4, the acquiring module 301 includes a first acquiring unit 3011 and a second acquiring unit 3012.

The first acquiring unit 3011 is arranged to acquire an input voltage of a charging input terminal of the terminal device.

The second acquiring unit 3012 is arranged to acquire a feedback voltage according to the input voltage, where a ratio of the feedback voltage to the input voltage is equal to a preset proportion value.

Optionally, as illustrated in FIG. 4, the adjusting module 302 includes a determining unit 3021, a boosting unit 3022 and an adding unit 3023.

The determining unit 3021 is arranged to determine whether the feedback voltage is less than a preset reference voltage.

The boosting unit 3022 is arranged to acquire a difference voltage between the preset reference voltage and the feedback voltage when the feedback voltage is less than the preset reference voltage, and boost the difference voltage to a target voltage, where the target voltage is equal to a voltage drop across a line between the terminal device and the charger.

The adding unit 3023 is arranged to add the target voltage to the charging voltage and transmit an added voltage to the terminal device.

With the device for charging control according to the embodiment of the present disclosure, the feedback voltage of the charging input terminal of the terminal device is acquired by the acquiring module 301 in real time, and the adjusting module 302 is triggered to adjust the charging voltage of the charger according to the feedback voltage, and transmit the charging voltage to the terminal device, so that the input voltage of the terminal device can reach the charging voltage outputted by the charger and is maintained constant, thereby effectively avoiding a loss of charging efficiency due to the voltage drop caused by the impedance of the charging line.

### Third embodiment

A charging system is provided according to an embodiment of the present disclosure. As illustrated in FIG. 5, the system includes a charger and a terminal device.

The terminal device includes a charging control circuit 400 and a voltage feedback circuit 500.

The charging control circuit 400 is arranged to perform charging control on a battery. The charging control circuit 400 may include an input terminal for receiving a charging voltage from the charger.

The voltage feedback circuit 500 includes a feedback voltage input terminal 501 and a feedback voltage output terminal 502. The feedback voltage input terminal 501 is electrically connected to the input terminal of the charging control circuit 400.

The charger includes an AC-DC conversion module 100 and a voltage adjusting circuit 200.

The AC-DC conversion module 100 includes a DC output terminal 101 for providing the charging voltage to the terminal device to be charged.

The voltage adjusting circuit 200 receives the feedback voltage outputted by the feedback voltage output terminal 502 and adjusts the charging voltage to a preset voltage according to the feedback voltage. The voltage adjusting circuit 200 includes a first port 201, a second port 202 and a third port 203. The first port 201 is electrically connected to the DC output terminal 101, the second port 202 is electrically connected to the feedback voltage output terminal 502, and the third port 203 is electrically connected to an input terminal of the charging control circuit 400.

After the charger is connected to the terminal device, the DC output terminal 101 of the charger outputs a charging voltage V0 when the charging starts. When a line resistance between the third port 203 and the input terminal of the charging control circuit 400 is R and the charging current is I, an actual voltage V2 to the input terminal of the charging control circuit 400 is: V2=V0-I*R. The voltage feedback circuit 500 feeds back the feedback voltage detected from the input terminal of the charging control circuit 400 to the voltage adjusting circuit 200 of the charger. The voltage regulating circuit 200 boosts its own output voltage to a preset voltage value V1 according to the feedback voltage, so that V1=V0+I*R. It can be ensured that a new charging voltage to the terminal device side is V3=V1-I*R=V0, so that the input voltage of the terminal device is equal to the charging voltage outputted by the AC-DC conversion module, and is maintained constant, thereby improving charging efficiency.

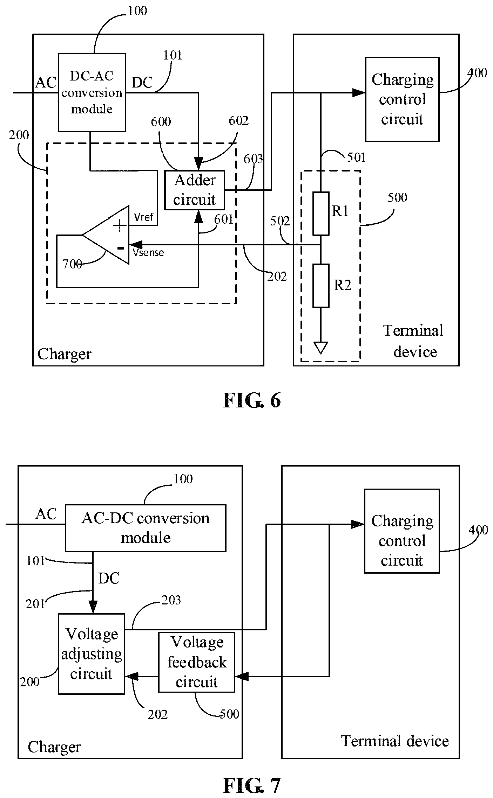

As illustrated in FIG. 6, optionally, the voltage adjusting circuit 200 includes an operational amplifier 700 and an adder circuit 600.

A non-inverting input terminal of the operational amplifier 700 is connected to a preset reference voltage Vref, and an inverting input terminal of the operational amplifier 700 is taken as the second port 202.

The adder circuit 600 includes a first input terminal 601, a second input terminal 602 and a preset voltage value output terminal 603. An output terminal of the operational amplifier 700 is electrically connected to the first input terminal 601. The second input terminal 602 is taken as the first port 201, and the preset voltage value output terminal 603 is taken as the third port 203.

When the preset reference voltage Vref is equal to the voltage of the input terminal of the charging control circuit 400, and is equal to the charging voltage, the feedback voltage is a first voltage value Vsense1, and the Vsense1 is equal to the preset reference voltage Vref.

An open loop gain of the operational amplifier 700 is X=V/(Vref-Vsense2). V represents a voltage drop across the line between the third port 203 and the input terminal of the charging control circuit 400 when the charger begins constant-current charging, and Vsense2 represents a second voltage value of the feedback voltage when the charger begins constant-current charging.

The AC-DC conversion module 100 converts an alternating current into a direct current, for example, converting an alternating current voltage (AC) of 110V or 220V into a direct current voltage (DC) of 5V, 9V, 12V, or the like, required by the terminal device. The preset reference voltage Vref connected to the non-inverting input terminal of the operational amplifier 700 can be acquired from the AC-DC conversion module 100, as long as the non-inverting input terminal of the operational amplifier 700 is connected to a related voltage output terminal of the AC-DC conversion module 100.

As illustrated in FIG. 6, during charging of the terminal device by using the charger, when the charging current of the terminal device is 0, that is, the terminal device is fully charged or not charged, the feedback voltage should be set to be exactly the same as Vref, to ensure a difference-mode input of the operational amplifier 700 to be 0. Then a difference-mode amplified signal of the operational amplifier 700 is also 0V. The voltage of the charger is maintained constant after passing though the adder circuit 600. Therefore, Vref is equal to the first voltage value Vsensel of the feedback voltage when Vref is equal to the voltage of the input terminal of the charging control circuit 400 and equal to the charging voltage. That is, Vsensel is equal to Vref when the terminal device is not charged or the terminal device is fully charged.

In addition, supposing an open loop gain of the operational amplifier 700 is X, when the charger begins constant-current charging, a voltage of an output terminal of the operational amplifier 700 is X*(Vref-Vsense2). This voltage and the charging voltage V0 outputted from the DC output terminal 101, after being added by the adder circuit 600, is equal to a preset voltage value VI, and therefore, the equation can be obtained: X*(Vref-Vsense2)+V0=V1, and the open loop gain of the operational amplifier 700 is obtained by X=(V1-V0)/(Vref-Vsense2), where V1-V0=IR, and when IR is represented by V, X=V/(Vref-Vsense2).

Optionally, as illustrated in FIG. 6, the voltage feedback circuit 500 includes a first resistor R1 and a second resistor R2. One end of the first resistor R1 is the feedback voltage input terminal 501, and the other end of the first resistor R1 is the feedback voltage output terminal 502. The other end of the first resistor R1 is electrically connected to one end of the second resistor R2, and the other end of the second resistor R2 is grounded, where r1/r2=V0/Vref-1, and r1 represents a resistance value of the first resistor R1, r2 represents a resistance value of the second resistor R2, and V0 represents the charging voltage.

Optionally, in printed circuit board (PCB) design, the first resistor R1 and the second resistor R2 may be placed beside a charging pin of the charging control circuit 400 to ensure that a voltage fed back by the first resistor R1 and the second resistor R2 is infinitely close to an input voltage of the charging control circuit 400. Specifically, the first resistor R1 and the second resistor R2 may be resistors with an accuracy of more than 1%. For the sake of power consumption, r1 and r2 may be greater than 10,000 ohms. There is no large current flowing through a line connecting the inverting input terminal of the operational amplifier 700 and the other end of the first resistor R1, and the voltage drop across the line is basically ignored, so that the voltage at the input terminal of the charging control circuit 400 can be accurately fed back to the charger to realize dynamic voltage compensation.

In addition, as illustrated in FIG. 6, during charging of the terminal device by using the charger, when the charging current of the terminal device is 0, that is, the terminal device is fully charged or not charged, the feedback voltage should be set to be exactly the same as Vref, to ensure a difference-mode of the operational amplifier 700 to be 0. Then a difference-mode amplified signal of the operational amplifier 700 is also 0V. The charger voltage is maintained constant after passing through the adder circuit 600. Therefore, Vref is equal to the first voltage value Vsense1 of the feedback voltage when Vref is equal to the voltage of the input terminal of the charging control circuit 400 and equal to the charging voltage. And Vsense1=V0*r2/(r1+r2), then V0*r2/(r1+r2)=Vref, and r1/r2=V0/Vref-1 can be obtained.

Optionally, when a preset reference voltage Vref of the non-inverting input terminal of the operational amplifier 700 is 1.2V, the first resistor R1 is 38 kilo ohms, and the second resistor R2 is 12 kilo ohms, a charging voltage outputted by the DC output terminal 101 is V0=5V when charging is started, the voltage to the input terminal of the charging control circuit 400 is also V2=5V, and a divided voltage Vsense detected by the voltage feedback circuit 500 is: Vsense=V2*R2/(R2+R1)=5*12/(12+38)=1.2V. In this case, Vsense and Vref are the same, and the differential mode output of the power amplifier is 0.

As the charging current gradually increases, the voltage to the input terminal of the charging control circuit 400 gradually decreases, and the divided voltage Vsense of the voltage feedback circuit 500 gradually decreases. Supposing that the impedance of the charging line between the preset voltage value output terminal 603 and the input terminal of the charging control circuit 400 is 0.3 ohm, when the constant-current charging begins, the charging current is 1A, the voltage to the input terminal of the charging control circuit 400 is V2=5-1*0.3=4.7V, and the Vsense voltage is 4.7*12/(12+38)=1.128V, which is lower than Vref by 0.072V. A gain of the operational amplifier 700 is reasonably designed so as to get a differential-mode output voltage of 0.3V. After the charger obtains the difference and adds the voltage to the output terminal through the adding circuit 600, a new output voltage V1 of the charger is 5.3V, which can ensure that a voltage at the input terminal of the charging control circuit 400 is V0=V1-1*0.3=5V when charging with a current of 1A, maintaining a constant input voltage at the terminal device side, and improving charging efficiency.

The charging current is dynamically changed during the entire charging process (from a trickle current to a constant current and finally to constant voltage), which results in that the voltage drop across the charging line is ever changing. Therefore, the entire loop is also dynamically operated to reach a stable input voltage at the terminal device side.

In an optional embodiment, the voltage feedback circuit 500 may further be disposed on the charger, as illustrated in FIG. 7. This type of charger may be applied to a common terminal device, so that the charging voltage at the terminal device side can be maintained in a stable state and the charging efficiency can be improved when the common terminal device is being charged by using this type of charger. However, in order to make the feedback voltage acquired by the voltage feedback circuit 500 more accurate, the voltage feedback circuit 500 is preferably disposed on the terminal device.

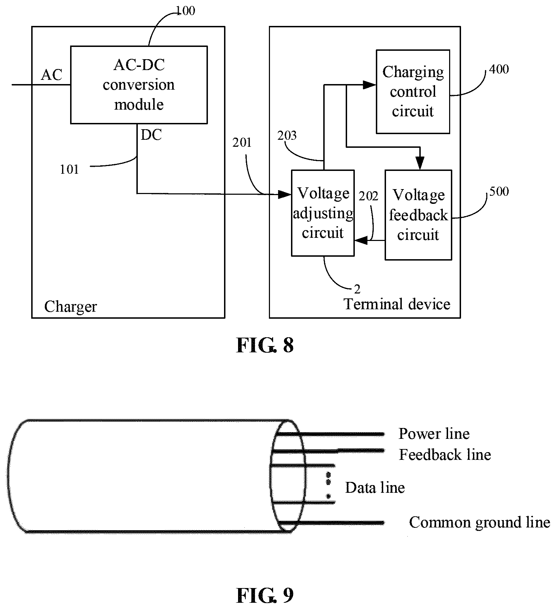

Optionally, the voltage adjusting circuit 200 may further be disposed at the terminal device, as illustrated in FIG. 8. When the terminal device is being charged by a common charger, the charging voltage at the terminal device side can be maintained in a stable state, and the charging efficiency is improved. However, when this type of the terminal device is being charged, the voltage adjusting circuit 200 may generate some heat. Therefore, in order to avoid overheat of the terminal device during charging, the voltage adjusting circuit 200 is preferably disposed on the charger.

Optionally, the charger further includes a common ground line. One end of the common ground line is electrically connected to the other end of the second resistor R2, and the other end of the common ground line is connected to a ground line of the operational amplifier 700.

Optionally, the ground line of the voltage feedback circuit 500 and the ground line of the voltage adjusting circuit 200 are connected by the added common ground line, so that the voltage feedback circuit 500 and the voltage adjusting circuit 200 are grounded, thereby feeding back the charging voltage at the terminal device side with a higher accuracy.

Optionally, the charger may further include a voltage feedback line and a power line. The feedback voltage output terminal 502 and the second port 202 are electrically connected by the voltage feedback line, and an input terminal of the charging control circuit 400 and the third port 203 are electrically connected by the power line. That is, when the voltage adjusting circuit 200 is disposed on the charger and the voltage feedback circuit 500 is disposed on the terminal device, a line connecting the feedback voltage output terminal 502 and the second port 202 is separately taken as a feedback line, and a line between the input terminal of the charging control circuit 400 and the third port 203 is separately taken as a power line, thereby improving the convenience of use.

Optionally, as illustrated in FIG. 6, the feedback line, the power line and the common ground line are wrapped inside a data line of the charger, so that the connection between the charger and the terminal device is more convenient.

Those skilled in the art will appreciate that all or a portion of actions in the above-described method may be performed by a program to instruct related hardware (such as a processor), which may be stored in a computer readable storage medium, such as a read only memory, a magnetic disk or an optical disk. Optionally, all or part of the actions of the above-described embodiments may also be implemented using one or more integrated circuits. Correspondingly, the module/unit in the foregoing embodiment may be implemented in the form of hardware. For example, corresponding function of the modules/units may be implemented by an integrated circuit, or may be implemented in the form of a software function module, for example, corresponding function of the modules/units may be implemented by executing a program instruction stored in the memory by a processor. The present disclosure is not limited to a combination of hardware and software in any specific form.

### INDUSTRIAL APPLICABILITY

With the technical solution of the embodiments of the present disclosure, it can ensure a constant charging voltage at a terminal device side without increasing power consumption and heat generation of a motherboard of a terminal device, thereby effectively avoiding a loss of charging efficiency due to a voltage drop caused by an impedance of a charging line.

## Claims

1. A method for charging control, comprising:
acquiring, by a terminal device, a voltage value of a feedback voltage of a charging input terminal, and transmitting, by the terminal device, the voltage value of the feedback voltage to a charger; and
adjusting, by the charger, a charging voltage to be provided to the terminal device by the charger according to the voltage value of the feedback voltage, and supplying, by the charger, power to the terminal device according to the adjusted voltage.

2. The method of claim 1, wherein acquiring, by the terminal device, the voltage value of the feedback voltage of the charging input terminal comprises:
acquiring, by the terminal device, a voltage value of an input voltage of the charging input terminal; and
acquiring, by the terminal device, the voltage value of the feedback voltage according to the voltage value of the input voltage, wherein a ratio of the voltage value of the feedback voltage to the voltage value of the input voltage is equal to a preset proportion value.

3. The method of claim 1, wherein adjusting, by the charger, the charging voltage provided to the terminal device by the charger according to the voltage value of the feedback voltage, and supplying, by the charger, power to the terminal device according to the adjusted voltage comprises:
determining, by the charger, whether the voltage value of the feedback voltage is less than a voltage value of a preset reference voltage;
when the voltage value of the feedback voltage is less than the voltage value of the preset reference voltage, acquiring, by the charger, a difference voltage between the preset reference voltage and the feedback voltage, and boosting, by the charger, the difference voltage to a target voltage, wherein the target voltage is equal to a voltage drop across a line between the terminal device and the charger; and
adding, by the charger, the target voltage to the charging voltage to get an added voltage, and supplying, by the charger, power to the terminal device according to the added voltage.

4. A method for charging control, comprising:
receiving, by a charger, a voltage value of a feedback voltage from a terminal device; and
adjusting, by the charger, a charging voltage to be provided to the terminal device according to the voltage value of the feedback voltage, and supplying, by the charger, power to the terminal device according to the adjusted voltage.

5. The method of claim 4, wherein adjusting, by the charger, the charging voltage to be provided to the terminal device according to the voltage value of the feedback voltage, and supplying, by the charger, power to the terminal device according to the adjusted voltage comprises:
determining, by the charger, whether the voltage value of the feedback voltage is less than a voltage value of a preset reference voltage;
when the voltage value of the feedback voltage is less than the voltage value of the preset reference voltage, acquiring, by the charger, a difference voltage between the preset reference voltage and the feedback voltage, and boosting, by the charger, the difference voltage to a target voltage, wherein the target voltage is equal to a voltage drop across a line between the terminal device and the charger; and
adding, by the charger, the target voltage to the charging voltage to get an added voltage, and supplying power to the terminal device according to the added voltage.

6. A device for charging control, comprising:
an acquiring module, arranged to acquire a voltage value of a feedback voltage of a charging input terminal of a terminal device and transmit the voltage value of the feedback voltage to a charger; and
an adjusting module, arranged to adjust a charging voltage to be provided to the terminal device by the charger according to the voltage value of the feedback voltage acquired by the acquiring module, and supply power to the terminal device according to the adjusted voltage.

7. The device of claim 6, wherein the acquiring module comprises:
a first acquiring unit, arranged to acquire a voltage value of an input voltage of the charging input terminal of the terminal device; and
a second acquiring unit, arranged to acquire the voltage value of the feedback voltage according to the voltage value of the input voltage, wherein a ratio of the voltage value of the feedback voltage to the voltage value of the input voltage is equal to a preset proportion value.

8. The device of claim 6, wherein the adjusting module comprises:
a determining unit, arranged to determine whether the voltage value of the feedback voltage is less than a voltage value of a preset reference voltage;
a boosting unit, arranged to, when the voltage value of the feedback voltage is less than the voltage value of the preset reference voltage, acquire a difference voltage between the preset reference voltage and the feedback voltage, and boost the difference voltage to a target voltage, wherein the target voltage is equal to a voltage drop across a line between the terminal device and the charger; and
an adding unit, arranged to add the target voltage to the charging voltage to get an added voltage and supply power to the terminal device according to the added voltage.

9. A charger, comprising:
an alternate current-direct current, AC-DC, conversion module, comprising a DC output terminal for providing a charging voltage to a terminal device to be charged; and
a voltage adjusting circuit, arranged to receive a feedback voltage outputted by a feedback voltage output terminal of the terminal device and adjust the charging voltage to a preset voltage according to a voltage value of the feedback voltage, wherein the voltage adjusting circuit comprises a first port, a second port and a third port, the first port is electrically connected to the DC output terminal, the second port is electrically connected to the feedback voltage output terminal, and the third port is electrically connected to an input terminal of a charging control circuit of the terminal device.

10. The charger of claim 9, wherein the voltage adjusting circuit further comprises an operational amplifier and an adder circuit, wherein
a non-inverting input terminal of the operational amplifier is connected to a preset reference voltage Vref, and an inverting input terminal of the operational amplifier is taken as the second port; and
the adder circuit comprises a first input terminal, a second input terminal and a preset voltage value output terminal, wherein an output terminal of the operational amplifier is electrically connected to the first input terminal, the second input terminal is taken as the first port, and the preset voltage value output terminal is taken as the third port,
when a voltage value of the preset reference voltage Vref is equal to a voltage value of the voltage of the input terminal of the charging control circuit, and is equal to a voltage value of the charging voltage, the voltage value of the feedback voltage is a first voltage value Vsense1; and
an open loop gain of the operational amplifier is X=V/(Vref-Vsense2), wherein V represents a voltage drop across the line between the third port and the input terminal of the charging control circuit when the charger begins constant-current charging, and Vsense2 represents a second voltage value of the feedback voltage when the charger begins constant-current charging.

11. The charger of claim 10, further comprising a common ground line, wherein one end of the common ground line is electrically connected to another end of the second resistor, and another end of the common ground line is connected to a ground line of the operational amplifier.

12. A system for charging control, comprising a terminal device, and the charger of any one of claims 9 to 11, wherein
the terminal device comprises a charging control circuit and a voltage feedback circuit;
the charging control circuit is arranged to perform charging control on a battery, and comprises an input terminal for receiving a charging voltage from the charger; and
the voltage feedback circuit comprises a feedback voltage input terminal and a feedback voltage output terminal, wherein the feedback voltage input terminal is electrically connected to an input terminal of the charging control circuit.

13. The system for charging control of claim 12, wherein the voltage feedback circuit further comprises a first resistor and a second resistor, one end of the first resistor is the feedback voltage input terminal, and another end of the first resistor is the feedback voltage output terminal, the another end of the first resistor is electrically connected to one end of the second resistor, and another end of the second resistor is grounded, wherein r1/r2=V0/Vref-1, and r1 represents a resistance value of the first resistor R1, r2 represents a resistance value of the second resistor R2, and V0 represents a voltage value of the charging voltage.
